(19) Europäisches Patentamt / European Patent Office / Office européen des brevets

(11) **EP 4 693 709 A1**

(12) **EUROPEAN PATENT APPLICATION**
published in accordance with Art. 153(4) EPC

(43) Date of publication:
**11.02.2026 Bulletin 2026/07**

(21) Application number: **24780928.8**

(22) Date of filing: **29.03.2024**

(51) International Patent Classification (IPC):
**H01M 50/553** (2021.01)     **H01G 11/78** (2013.01)
**H01M 50/105** (2021.01)     **H01M 50/131** (2021.01)
**H01M 50/15** (2021.01)     **H01M 50/16** (2021.01)
**H01M 50/176** (2021.01)     **H01M 50/178** (2021.01)
**H01M 50/534** (2021.01)     **H01M 50/562** (2021.01)

(52) Cooperative Patent Classification (CPC):
**H01G 11/78; H01M 50/105; H01M 50/131;
H01M 50/15; H01M 50/16; H01M 50/176;
H01M 50/178; H01M 50/534; H01M 50/553;
H01M 50/562;** Y02E 60/10

(86) International application number:
**PCT/JP2024/013389**

(87) International publication number:
**WO 2024/204836 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.03.2023 JP 2023054423**

(71) Applicant: **Dai Nippon Printing Co., Ltd.
Tokyo 162-8001 (JP)**

(72) Inventors:
• **URIU, Toshibumi**
  **Tokyo 162-8001 (JP)**
• **MIYASHIRO, Kae**
  **Tokyo 162-8001 (JP)**
• **KANAZAWA, Sayako**
  **Tokyo 162-8001 (JP)**
• **SASAKI, Miho**
  **Tokyo 162-8001 (JP)**

(74) Representative: **Müller-Boré & Partner
Patentanwälte PartG mbB
Friedenheimer Brücke 21
80639 München (DE)**

(54) **POWER STORAGE DEVICE, ELECTRODE TERMINAL UNIT, AND EXTERIOR BODY SET**

(57)     A power storage device comprising an electrode body, an exterior body, and an electrode terminal. The exterior body seals the electrode body. The electrode terminal has one end part and another end part arranged along a first direction, the one end part being connected to the electrode body, the other end part projecting to outside the exterior body, and the electrode terminal being composed of a first material. The exterior body has a fixing member that is fixed to the electrode terminal along a second direction intersecting the first direction between the one end part and the other end part of the electrode terminal, the fixing member being composed of a second material that is different from the first material. The relationship $(h \times T)^2 \times (\alpha1/\alpha2) \div L0 \geq 0.222$ is satisfied, where h (HV) is the Vickers hardness of the first material, T (mm) is the thickness of the electrode terminal along a direction orthogonal to the first direction and the second direction, $\alpha1$ is the linear expansion coefficient of the first material, $\alpha2$ is the linear expansion coefficient of the second material, and L0 (mm) is the length of the electrode terminal fixed to the fixing member along the second direction.

FIG. 1

EP 4 693 709 A1

**Description**

Technical Field

The present invention relates to an electrical storage device, an electrode terminal unit, and an outer packaging set.

Background Art

PTL 1 discloses an electrical storage cell. The electrical storage cell includes a battery element and an outer packaging housing the battery element. The outer packaging includes a tubular sheet member and a first resin member joined to the sheet member so as to close a first opening of the sheet member. The electrical storage cell further includes a positive electrode tab and a negative electrode tab electrically connected to the battery element. The positive electrode tab and the negative electrode tab are led out to the outside of the outer packaging through a sealing portion between the inner surface of the sheet member and the first resin member. A sealing portion is made of the same resin member as the first resin member.

Citation List

Patent Literature

PTL 1: Japanese Patent Laid-open Publication No. 2022-040929

Summary of Invention

Technical Problem

A thermal shock test (heat shock test) is one of tests for evaluating long-term reliability of an electrical storage device as disclosed in PTL 1. In this test, a test article is exposed to an environment in which a rapid temperature change is repeated, and the resistance of the test article to the temperature change is evaluated. In such a thermal shock test, the tab fixed to the resin member, that is, the electrode terminal may be deformed. However, PTL 1 does not consider this.
An object of the present invention is to provide an electrical storage device having improved deformation resistance of an electrode terminal to a temperature change.

Solution to Problem

An electrical storage device according to a first aspect of the present invention includes an electrode assembly, an outer packaging, and an electrode terminal. The outer packaging seals the electrode assembly. The electrode terminal has one end part and other end part disposed along a first direction, the one end part being connected to the electrode assembly, the other end part protruding to an outside of the outer packaging, and the electrode terminal being composed of a first material. The outer packaging has a fixing member fixed to the electrode terminal along a second direction intersecting the first direction between the one end part and the other end part of the electrode terminal and composed of a second material different from the first material. When a Vickers hardness of the first material is designated as h (HV), a thickness of the electrode terminal along a direction orthogonal to the first direction and the second direction is designated as T (mm), a linear expansion coefficient of the first material is designated as $\alpha 1$, a linear expansion coefficient of the second material is designated as $\alpha 2$, and a length of the electrode terminal fixed to the fixing member along the second direction is designated as L0 (mm),

$$(h \times T)^2 \times (\alpha 1/\alpha 2) \div L0 \geq 0.222$$

is satisfied.
An electrical storage device according to a second aspect of the present invention is the electrical storage device according to the first aspect, in which the first material is metal, and the second material is resin.
An electrode terminal unit for an electrical storage device according to a third aspect of the present invention includes an electrode terminal and a fixing member. The electrode terminal has one end part and other end part disposed along a first direction, the one end part being configured to be connected to an electrode assembly of an electrical storage device, and the electrode terminal being composed of a first material. The fixing member is fixed to the electrode terminal along a second direction intersecting the first direction between the one end part and the other end part of the electrode terminal and is composed of a second material different from the first material. When a Vickers hardness of the first material is designated as h (HV), a thickness of the electrode terminal along a direction orthogonal to the first direction and the second direction is designated as T (mm), a linear expansion coefficient of the first material is designated as $\alpha 1$, a linear expansion coefficient of the second material is designated as $\alpha 2$, and a length of the electrode terminal fixed to the fixing member along the second direction is designated as L0 (mm),

$$(h \times T)^2 \times (\alpha 1/\alpha 2) \div L0 \geq 0.222$$

is satisfied.

An outer packaging set for an electrical storage device according to a fourth aspect of the present invention includes: the electrode terminal unit for an electrical storage device according to the third aspect, and an exterior film joined to the electrode terminal unit.

Advantageous Effects of Invention

According to the present invention, it is possible to provide an electrical storage device having improved deformation resistance of an electrode terminal to a temperature change.

Brief Description of Drawings

[Fig. 1] Fig. 1 is a perspective view schematically showing an electrical storage device according to an embodiment.
[Fig. 2] Fig. 2 is a sectional view showing an example of a layer configuration of an exterior member of Fig. 1.
[Fig. 3] Fig. 3 is a perspective view schematically showing a configuration of a fixing member.
[Fig. 4] Fig. 4 is a perspective view schematically showing a configuration around an electrode terminal according to an embodiment.
[Fig. 5] Fig. 5 is a perspective view schematically showing a configuration around an electrode terminal according to another embodiment.
[Fig. 6] Fig. 6 is a sectional view showing an example of a fixing member and a barrier film joined thereto.
[Fig. 7] Fig. 7 is a sectional view showing an example of a layer configuration of the barrier film.
[Fig. 8] Fig. 8 is a sectional view showing another example of the layer configuration of the barrier film.
[Fig. 9] Fig. 9 is a sectional view showing still another example of the layer configuration of the barrier film.

Description of Embodiments

Hereinafter, embodiments of the present invention will be described in detail with reference to the drawings. In the drawings, like or equivalent parts are denoted by like symbols, and the descriptions thereof are not repeated. In the present embodiment, a numerical range indicated by the term "A to B" means "A or more" and "B or less". For example, the expression of "2 to 15 mm" means 2 mm or more and 15 mm or less. In numerical ranges serially described in the present embodiment, an upper limit value or a lower limit value described for a numerical range may be replaced by an upper limit value or a lower limit value of one of other serially described numerical ranges. Upper limit values, upper and lower limit values, or lower limit values, which are described for different ranges, may be combined to form a numerical range.

<1. Configuration of Electrical Storage Device>

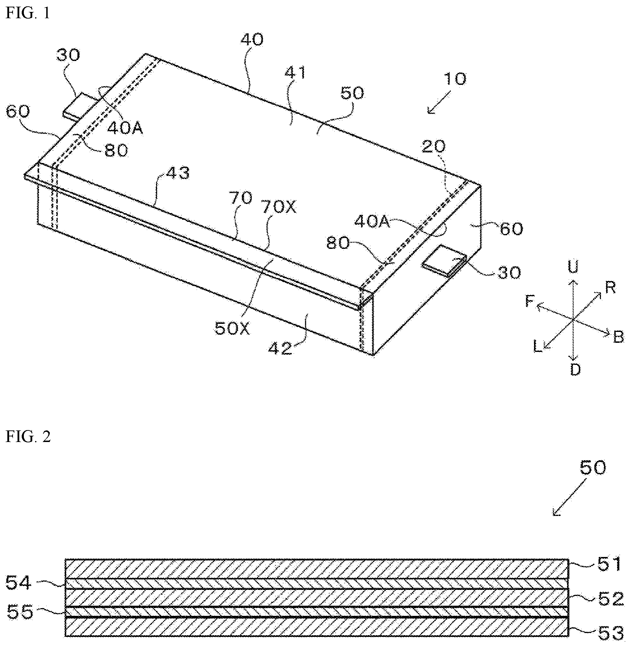

Fig. 1 is a perspective view schematically showing an electrical storage device 10 according to the present embodiment. In Fig. 1, the direction along arrow UD indicates a thickness direction of the electrical storage device 10, and the direction along arrow LR indicates a width direction of the electrical storage device 10. The direction along arrow FB indicates a depth direction of the electrical storage device 10. The directions indicated by each of arrows UDLRFB are also shared with the subsequent drawings.

Referring to Fig. 1, the electrical storage device 10 includes an electrode assembly 20, an electrode terminal 30, and an outer packaging 40. The electrode assembly 20 includes, for example, a lithium ion battery, a capacitor, a lithium ion polymer battery, an all-solid-state battery, a semi-solid-state battery, a pseudo-solid-state battery, a polymer battery, an all-polymer battery, a lead storage battery, a nickel-hydrogen storage battery, a nickel-cadmium storage battery, a nickel-iron storage battery, a nickel-zinc storage battery, a silver oxide-zinc storage battery, a metal-air battery, a polyvalent cation battery, or electrodes (positive electrode and negative electrode) forming an electrical storage member such as a capacitor, and a separator. In the present embodiment, the shape of the electrode assembly 20 is substantially a cuboid. Note that the "substantially cuboid" includes a perfect cuboid, and for example, a solid that can be seen as a cuboid by modifying the shape of a part of the outer surface thereof. The shape of the electrode assembly 20 may be, for example, a cylinder or a polygonal column.

The outer packaging 40 seals the electrode assembly 20. The outer packaging 40 includes the exterior film 50 and a pair of lids 60. The exterior film 50 wraps the electrode assembly 20 so as to form a pair of openings 40A. In the present embodiment, the exterior film 50 is wound around the electrode assembly 20 so as to form the pair of openings 40A. However, wrapping the electrode assembly 20 with the exterior film 50 is not limited to wrapping the exterior film 50, and the electrode assembly 20 may be disposed inside the exterior film 50 formed in a cylindrical shape in advance. The exterior film 50 has a bulging portion 50X bulging outward from a portion where the electrode assembly 20 is wrapped in a state where the electrode assembly 20 is wrapped. The pair of lids 60 is disposed on the sides of the electrode assembly 20 so as to close the pair of openings 40A. As described later, the pair of lids 60 is an example of the fixing member of the present invention.

[Exterior film]

Fig. 2 is a sectional view showing a layer configuration of the exterior film 50 of the electrical storage device 10 of Fig. 1. The exterior film 50 is, for example, a laminate (laminate film) including a base material layer 51, a barrier layer 52 and a heat-sealable resin layer 53 in the stated order. The exterior film 50 is not required to include all these layers, and may be free of, for example, the barrier layer 52. That is, the exterior film 50 is only required to be made from a material that is flexible and easy to bend, and the exterior film 50 may be made from, for example, a resin film. In the exterior film 50, the innermost layer and the outermost layer may be the heat-sealable resin layer 53. In this case, the exterior film 50 may wrap the electrode assembly 20 and the lid 60 by joining the outermost layer and the innermost layer.

The base material layer 51 is a layer for imparting heat resistance to the exterior film 50 and suppressing generation of pinholes which may occur during processing or distribution. The base material layer 51 includes, for example, at least one of a stretched polyester resin layer and a stretched polyamide resin layer. For example, when the base material layer 51 includes at least one of a stretched polyester resin layer and a stretched polyamide resin layer, the barrier layer 52 can be protected during processing of the exterior film 50 to suppress breakage of the exterior film 50. From the viewpoint of increasing the tensile elongation of the exterior film 50, the stretched polyester resin layer is preferably a biaxially stretched polyester resin layer, and the stretched polyamide resin layer is preferably a biaxially stretched polyamide resin layer. Further, from the viewpoint of excellent piercing strength or impact strength, the stretched polyester resin layer is more preferably a biaxially stretched polyethylene terephthalate (PET) film, and the stretched polyamide resin layer is more preferably a biaxially stretched nylon (ONy) film. The base material layer 51 may include both a stretched polyester resin layer and a stretched polyamide resin layer. From the viewpoint of film strength, the thickness of the base material layer 51 is, for example, preferably 5 to 300 $\mu$m, more preferably 5 to 150 $\mu$m.

The barrier layer 52 is joined to, for example, the base material layer 51 with an adhesive layer 54 interposed therebetween. The barrier layer 52 included in the exterior film 50 is composed of, for example, a metal foil having a barrier property from the viewpoint of moisture resistance, processability such as extensibility, and cost. Examples of the metal foil include an aluminum alloy, stainless steel, titanium steel, and steel plates. The aluminum alloy foil preferably contains iron from the viewpoint of suitability for packaging at the time of packaging the electrode assembly 20, and pinhole resistance. The content of iron in the aluminum alloy foil is preferably 0.5 to 5.0 mass%, more preferably 0.7 to 2.0 mass%. When the content of iron is 0.5 mass% or more, the exterior film 50 has suitability for packaging, excellent pinhole resistance and extensibility. When the content of iron is 5.0 mass% or less, the exterior film 50 has excellent flexibility. The barrier layer 52 may include a deposited film and a resin layer in addition to the metal foil.

From the viewpoint of barrier properties, pinhole resistance and suitability for packaging, the thickness of the barrier layer 52 is, for example, preferably 5 to 200 $\mu$m, more preferably 30 to 80 $\mu$m. When the thickness of the barrier layer 52 is 15 $\mu$m or more, the exterior film 50 is less likely to be broken even if stress is applied by packaging processing. When the thickness of the barrier layer 52 is 200 $\mu$m or less, an increase in mass of the exterior film 50 can be reduced, and a decrease in weight energy density of the electrical storage device 10 can be suppressed.

When the barrier layer 52 is an aluminum foil, it is preferable that a corrosion-resistant film is provided at least on a surface on a side opposite to the base material layer 51 for prevention of dissolution and corrosion, and the like. The barrier layer 52 may include a corrosion-resistant film on each of both surfaces. Here, the corrosion-resistant film refers to a thin film obtained by subjecting the surface of the barrier layer 52 to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance (for example, acid resistance and alkali resistance) to the barrier layer 52. Specifically, the corrosion-resistant film means a film which improves the acid resistance of the barrier layer 52 (acid-resistant film), a film which improves the alkali resistance of the barrier layer 52 (alkali-resistant film), or the like. One of treatments for forming the corrosion-resistant film may be performed, or two or more thereof may be performed in combination. In addition, not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. The definition of the chemical conversion treatment may include these treatments. When the barrier layer 52 is provided with the corrosion-resistant film, the barrier layer 52 is regarded as including the corrosion-resistant film.

The corrosion-resistant film exhibits the effects of preventing delamination between the barrier layer 52 (e.g. an aluminum alloy foil) and the base material layer 51 during molding of the exterior film 50; preventing dissolution and corrosion of the surface of the barrier layer 52, particularly dissolution and corrosion of aluminum oxide present on the surface of the barrier layer 52 when the barrier layer 52 is an aluminum alloy foil, by hydrogen fluoride generated by reaction of an electrolyte with moisture; improving the bondability (wettability) of the surface of the barrier layer 52; preventing delamination between the base material layer 51 and the barrier layer 52 during heat-sealing; and preventing delamination between the base material layer 51 and the barrier layer 52 during molding.

The heat-sealable resin layer 53 is joined to, for example, the barrier layer 52 with an adhesive layer 55 interposed therebetween. The heat-sealable resin layer 53 in the exterior film 50 is a layer that imparts a heat sealing property to the exterior film 50 by heat sealing. Examples of the heat-sealable resin layer 53 include resin films formed of a polyester-based resin such as a polyethylene terephthalate-based resin or a polybutylene terephthalate-based resin, a polyolefin-based resin such as a polyethylene-based resin or a polypropylene-based resin, or an acid-modified polyolefin-based resin obtained by graft-modifying the polyolefin-based resin with an acid such as maleic anhydride. From the viewpoint of sealability and strength, the thickness of the heat-sealable resin layer 53 is, for example, preferably 20 to 300 $\mu$m, more preferably 40 to 150 $\mu$m.

The exterior film 50 preferably includes one or more layers having a buffer function (hereinafter, referred to as "buffer layers") outside the heat-sealable resin layer 53, more preferably outside the barrier layer 52. The buffer layer may be laminated outside the base material layer 51, and the base material layer 51 may also function as a buffer layer. When the exterior film 50 includes a plurality of buffer layers, the buffer layers may lie side-by-side, or may be laminated with the base material layer 51, the barrier layer 52 or the like interposed between the buffer layers.

The material for forming the buffer layer can be arbitrarily selected from materials having a cushioning property. The material having a cushioning property is, for example, rubber, a nonwoven fabric, or a foamed sheet. The rubber is, for example, natural rubber, fluororubber, or silicone rubber. The rubber hardness is preferably about 20 to 90. The material for forming a nonwoven fabric is preferably a material having excellent heat resistance. When the buffer layer is made from a nonwoven fabric, the lower limit of the thickness of the buffer layer is preferably 100 $\mu$m, still more preferably 200 $\mu$m, still more preferably 1,000 $\mu$m. When the buffer layer is made from a nonwoven fabric, the upper limit of the thickness of the buffer layer is preferably 5,000 $\mu$m, still more preferably 3,000 $\mu$m. The thickness of the buffer layer is preferably in the range of 100 $\mu$m to 5,000 $\mu$m, 100 $\mu$m to 3,000 $\mu$m, 200 $\mu$m to 5,000 $\mu$m, 200 $\mu$m to 3,000 $\mu$m, 1,000 $\mu$m to 5,000 $\mu$m, or 1,000 $\mu$m to 3,000 $\mu$m. The thickness of the buffer layer is most preferably in the range of 1,000 $\mu$m to 3,000 $\mu$m.

When the buffer layer is made from rubber, the lower limit of the thickness of the buffer layer is preferably 0.5 mm. When the buffer layer is made from rubber, the upper limit of the thickness of the buffer layer is preferably 10 mm, still more preferably 5 mm, still more preferably 2 mm. When the buffer layer is made from rubber, the thickness of the buffer layer is preferably in the range of 0.5 mm to 10 mm, 0.5 mm to 5 mm, or 0.5 mm to 2 mm.

When the exterior film 50 includes a buffer layer, the buffer layer functions as a cushion, so that the exterior film 50 is prevented from being damaged by the impact of falling of the electrical storage device 10 or handling during manufacturing of the electrical storage device 10.

Here, for example, there is a method in which a housing portion (recess) for housing the electrode assembly 20 is formed in the exterior film 50 through cold molding. However, it is not always easy to form a deep housing portion by such a method. If an attempt is made to form a deep (for example, 15 mm in terms of molding depth) housing portion (recess) by cold molding, pinholes or cracks are generated in the exterior film 50, leading to a rise in possibility that battery performance deteriorates. On the other hand, in the present embodiment, since the outer packaging 40 seals the electrode assembly 20 by winding the exterior film 50 around the electrode assembly 20, the electrode assembly 20 can be easily sealed regardless of the thickness of the electrode assembly 20. For reducing a dead space between the electrode assembly 20 and the exterior film 50 in order to improve the volume energy density of the electrical storage device 10 and improving the cooling efficiency, it is preferable that the exterior film 50 is wound in a state of being in contact with the outer surface of the electrode assembly 20. In an all-solid-state battery, it is necessary to eliminate the space between the electrode assembly 20 and the exterior film 50 from the viewpoint that it is necessary to uniformly apply a high pressure from the outer surface of the battery for exhibiting battery performance, and therefore, it is preferable that the exterior film 50 is wound in a state of being in contact with the outer surface of the electrode assembly 20.

In the present embodiment, with the exterior film 50 wound around the electrode assembly 20 so as to have the opening 40A, surfaces of the exterior film 50 which face each other (heat-sealable resin layer 53) of the bulging portion 50X are heat-sealed to form a first sealed portion 70.

The bulging portion 50X includes a portion where a pair of opposing edge ends of the exterior film 50 shown in Fig. 2 is overlapped. The first sealed portion 70 extends in a longitudinal direction (FB direction) of the outer packaging 40. In the outer packaging 40, a location at which the first sealed portion 70 is formed can be arbitrarily selected. In the present embodiment, a root 70X of the first sealed portion 70 is preferably located on a side 43 of a boundary between a first surface 41 and a second surface 42 of the outer packaging 40. The first surface 41 has a larger area than the second surface 42. The root 70X of the first sealed portion 70 may be located on an arbitrary surface of the outer packaging 40. From the viewpoint of configuring the electrical storage device 10 in a small size, when the electrical storage device 10 is used, the bulging portion 50X is folded on, for example, the first surface 41 or the second surface 42 of the outer packaging 40. In the present embodiment, when the electrical storage device 10 is used, the bulging portion 50X is folded toward the second surface 42 of the outer packaging 40.

In the present embodiment, a second sealed portion 80 is formed by heat-sealing the heat-sealable resin layer 53 of the exterior film 50 and the lid seal portion 63 of the lid 60 described later. That is, the exterior film 50 is joined to the lid 60.

[Fixing Member]

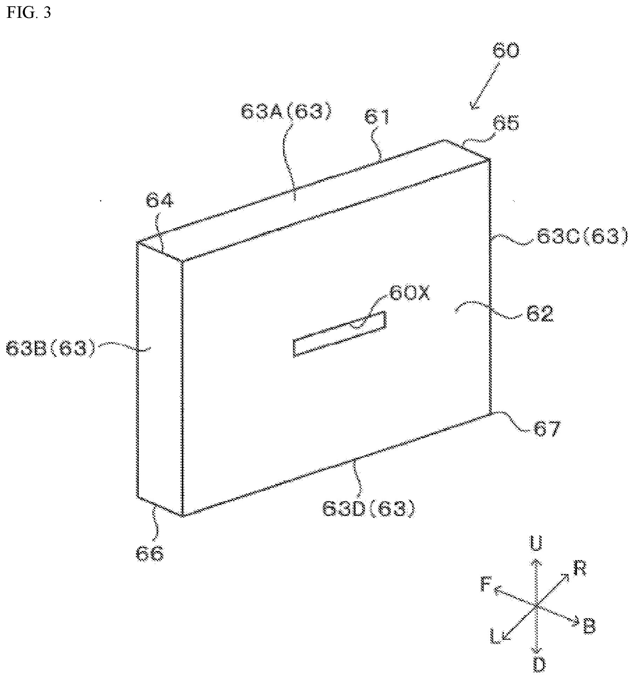

Fig. 3 is a perspective view of the lid 60 according to the present embodiment. The lid 60 has, for example, a substantially rectangular plate shape, and constitutes the outer packaging 40 together with the exterior film 50. The lid 60 is composed of the second material. Here, the phrase "composed of the second material" means that the content ratio of the second material is 50 mass% or more, preferably 80 mass% or more, more preferably 90 mass% or more, still more preferably 95 mass% or more when the total of materials for forming the lid 60 is 100 mass%. That is, the material for forming the lid 60 can contain a material other than the second material in addition to the second material.

The second material according to the present embodiment is resin. Specific examples of the resin include resins such as polyester, polyolefin, polyamide, epoxy resin, acrylic resin, fluororesin, polyurethane, silicone resin, and phenol resin, and modified products of these resins. The second material may be a mixture of these resins, a copolymer of these resins, or a modified product of the copolymer. Among them, the second material is preferably a heat-sealable resin such as polyester or polyolefin, and more preferably polyolefin. When the second material is resin, the lid 60 may be molded by any molding method.

Specific examples of the polyester include polyethylene terephthalate, polybutylene terephthalate, polyethylene naphthalate, polybutylene naphthalate, polyethylene isophthalate, and copolyester. Examples of the copolyester include copolyesters having ethylene terephthalate as a main repeating unit. Specific examples thereof include copolymer polyesters that are polymerized with ethylene isophthalate and include ethylene terephthalate as a main repeating unit (hereinafter, abbreviated as follows after polyethylene(terephthalate/isophthalate)), polyethylene(terephthalate/adipate), polyethylene(terephthalate/sodium sulfoisophthalate), polyethylene(terephthalate/sodium isophthalate), polyethylene (terephthalate/phenyl-dicarboxylate), and polyethylene(terephthalate/decane dicarboxylate). Among them, the second material is preferably polybutylene terephthalate from the viewpoint of enhancing heat resistance and pressure resistance.

Specific examples of the polyolefin include polyethylenes such as low-density polyethylene, medium-density polyethylene, high-density polyethylene and linear low-density polyethylene; ethylene-$\alpha$-olefin copolymers; polypropylene such as homopolypropylene, block copolymers of polypropylene (e.g., block copolymers of propylene and ethylene) and random copolymers of polypropylene (e.g., random copolymers of propylene and ethylene); propylene-$\alpha$-olefin copolymers; and terpolymers of ethylene-butene-propylene. The polyolefin resin in the case of a copolymer may be a block copolymer or a random copolymer. Among them, the second material is preferably polypropylene because it is excellent in heat-sealing property and electrolytic solution resistance.

The resin as the second material may contain a filler if necessary. Specific examples of the filler include glass beads, graphite, glass fiber, and carbon fiber. When the resin as the second material contains the filler, the deformation resistance of the lid 60 to a temperature change can be improved.

The lid 60 includes a first surface 61, a second surface 62, and a lid seal portion 63. The first surface 61 faces the electrode assembly 20. The second surface 62 is a surface on a side opposite to the first surface 61. The lid seal portion 63 is connected to the first surface 61 and the second surface 62, and heat-sealed to the heat-sealable resin layer 53 of the exterior film 50. The lid seal portion 63 includes a first seal surface 63A, a second seal surface 63B, a third seal surface 63C, and a fourth seal surface 63D. The first seal surface 63A forms the upper surface of the lid 60. The first seal surface 63A extends in the width direction (LR direction) of the electrical storage device 10 in front view of the lid 60. The second seal surface 63B and the third seal surface 63C are connected to the first seal surface 63A and form a lateral surface of the lid 60. The second seal surface 63B and the third seal surface 63C extend in the thickness direction (UD direction) of the electrical storage device 10 crossing the width direction in front view of the lid 60. In the present embodiment, the width direction of the electrical storage device 10 and the thickness direction of the electrical storage device 10 are orthogonal to each other in front view of the lid 60. The fourth seal surface 63D forms the lower surface of the lid 60. The fourth seal surface 63D extends in the width direction (LR direction) in front view of the lid 60.

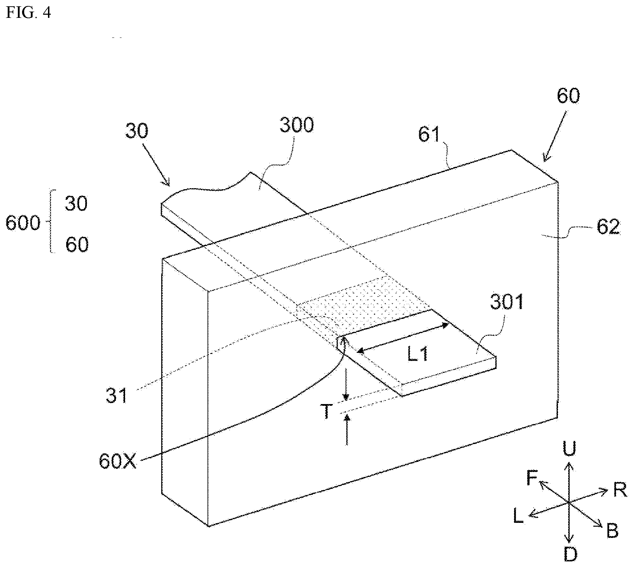

A through-hole 60X extending through the first surface 61 and the second surface 62 is formed in the lid 60 according to the present embodiment. In the present embodiment, the through-hole 60X has a rectangular shape in front view of the lid 60. The electrode terminal 30 passes through the through-hole 60X so as to protrude to the outside of the outer packaging 40 in a state where the electrode assembly 20 is accommodated. In the present embodiment, the inner wall surface of the through-hole 60X and the outer peripheral surface of the electrode terminal 30 facing the inner wall surface are adhesively fixed to each other with an adhesive film 31 described later interposed therebetween. Thereby, as described later, the lid 60 is fixed to the electrode terminal 30 along the second direction between one end part 300 and other end part 301 of the electrode terminal 30. Hereinafter, as shown in Fig. 4, one in which the electrode terminal 30 is fixed to the lid 60 may be referred to as an electrode terminal unit 600.

When the lid 60 has a plate shape, the lid 60 is preferably thick enough to suppress deformation of the outer packaging 40 even if electrical storage devices 10 are stacked. From another point of view, when the lid 60 has a plate shape, the lid seal portion 63 of the lid 60 is preferably thick enough to ensure that the lid seal portion 63 of the lid 60 and the exterior film 50 can be suitably heat-sealed in formation of the second sealed portion 80. The minimum value of the thickness of the lid 60 is, for example, 1.0 mm, more preferably 3.0 mm, still more preferably 4.0 mm. The maximum value of the thickness of the lid 60 is, for example, 20 mm, more preferably 15 mm, still more preferably 12 mm. The thickness of the material for forming the lid 60 is preferably in the range of 1.0 mm to 20 mm, 1.0 mm to 15 mm, 1.0 mm to 12 mm, 3.0 mm to 20 mm, 3.0 mm to 15 mm, 3.0 mm to 12 mm, 4.0 mm to 20 mm, 4.0 mm to 15 mm, or 4.0 mm to 12 mm. In the present embodiment, when the lid 60 is described as having a plate shape, the material for forming the lid 60 does not include a film defined by Japanese Industrial Standard (JIS), Packaging Terminology Standard. The thickness of the lid 60 may vary depending on a portion of the lid 60. When the thickness of the lid 60 varies depending on a portion, the thickness of the thickest portion of the lid 60 is defined as a thickness of the lid 60.

From the viewpoint of suppressing at least one of moisture and gas from entering the inside of the outer packaging 40 from a region between the lid 60 and the exterior film 50, the barrier film 90 may be joined to the lid 60. The barrier film 90 may cover at least a part of the lid seal portion 63 of the lid 60. In the present embodiment, the barrier film 90 covers the entire lid seal portion 63, the second surface 62, and the inside of the through-hole 60X of the lid 60. The barrier film 90 may cover the boundaries 64 to 67. Since the barrier film 90 covers the second surface 62 and the inside of the through-hole 60X in addition to the lid seal portion 63 and the boundaries 64 to 67, moisture is suppressed from entering the inside of the outer packaging 40 from a region between the electrode terminal 30 and the through-hole 60X. The barrier film 90 may be configured by one film, and for example, a portion covering the lid seal portion 63 and a portion covering the second surface 62 may be configured separately. In other words, the barrier film 90 may be a plurality of divided films.

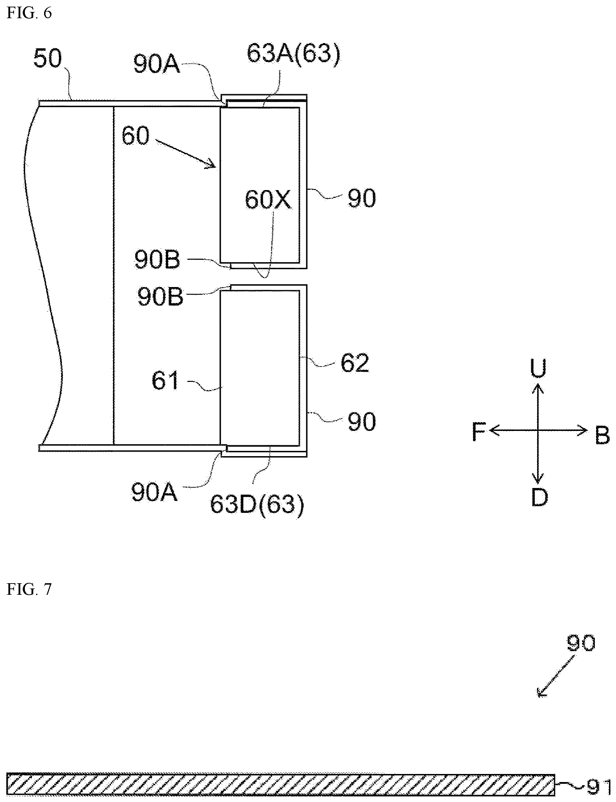

Fig. 6 is a sectional view showing an example of the lid 60 and the barrier film 90 joined thereto. The location of an end part 90A covering the lid seal portion 63 and the location of an end part 90B covering the inside of the through-hole 60X of the lid 60 in the barrier film 90 can be arbitrarily selected. When the electrical storage device 10 is a battery containing an electrolytic solution such as a lithium ion battery, end parts 90A and 90B of the barrier film 90 may come into contact with a gas such as hydrogen fluoride generated from the electrolytic solution, and a barrier layer 91 included in the barrier film 90 described later may corrode.

Therefore, from the viewpoint of suppressing corrosion of the barrier layer 91, the end part 90A is preferably located at a location closer to the second surface 62 than the boundary between the lid seal portion 63 and the first surface 61. From the same viewpoint, the end part 90B is preferably located at a position closer to the opening of the through-hole 60X on the second surface 62 side than the opening thereof on the first surface 61 side. The end part 90A may be located at a boundary between the lid seal portion 63 and the first surface 61, or may extend to a position closer to the electrode assembly 20 than the lid 60. The end part 90B may be located in the vicinity of the opening of the through-hole 60X on the first surface 61 side, or may extend to a position closer to the electrode assembly 20 than the lid 60.

Figs. 7 to 9 are sectional views showing examples of a layer configuration of the barrier film 90. As shown in Fig. 7, the barrier film 90 may include at least the barrier layer 91. Specifications of the barrier layer 91 are similar to the specifications of the barrier layer 52 of the exterior film 50. The barrier layer 91 may be thinner than the barrier layer 52 of the exterior film 50. When the barrier film 90 is a single layer including only the barrier layer 91, one surface of the barrier layer 91 is joined to the lid 60 with an adhesive or the like. When the barrier film 90 is a single layer including only the barrier layer 91, the other surface of the barrier layer 91 is joined to the heat-sealable resin layer 53 of the exterior film 50 with an adhesive or the like.

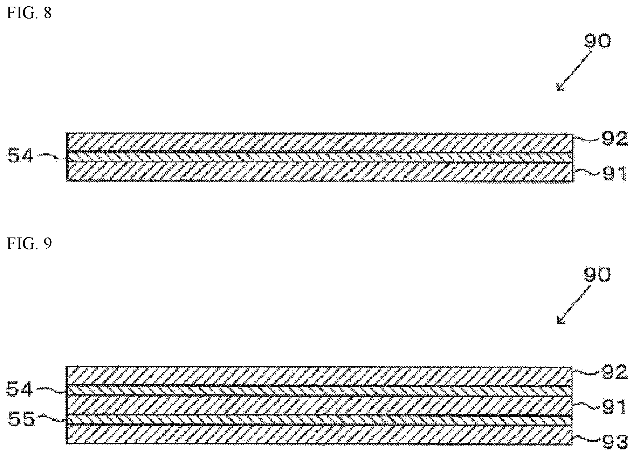

As shown in Fig. 8, the barrier film 90 may include an outer layer 92 laminated on a surface of the barrier layer 91 opposite to a surface joined to the lid 60. The outer layer 92 serves as, for example, a base material layer or a heat-sealable resin layer. The role as a base material layer is to protect the barrier layer 91. The role as the heat-sealable resin layer is to be heat-sealed with the heat-sealable resin layer 53 of the exterior film 50. When the outer layer 92 serves as a base material layer, the specifications of the outer layer 92 as a base material layer are similar to the specifications of the base material layer 51 of the exterior film 50. When the outer layer 92 serves as a heat-sealable resin layer, the specifications of the outer layer 92 as a heat-sealable resin layer are similar to the specifications of the heat-sealable resin layer 53 of the exterior film 50. When the outer layer 92 serves as a heat-sealable resin layer, the outer layer 92 may be thinner than the heat-sealable resin layer 53. When the outer layer 92 serves as a heat-sealable resin layer, the thickness of the outer layer 92 may be, for example, 5 to 20 μm. When the outer layer 92 is a base material layer, the barrier layer 91 is protected. When the outer layer 92 is a base material layer, the outer layer 92 and the heat-sealable resin layer 53 are joined with an adhesive or the like. When the outer layer 92 is a heat-sealable resin layer, the outer layer 92 and the heat-sealable resin layer 53 can be suitably joined by heat fusion. The barrier layer 91 and the outer layer 92 may be joined by the adhesive layer 54.

As shown in Fig. 9, the barrier film 90 may include a heat-sealable resin layer 93 laminated on a surface of the barrier layer 91 joined to the lid 60. Specifications of the heat-sealable resin layer 93 are similar to the specifications of the heat-sealable resin layer 53 of the exterior film 50. The heat-sealable resin layer 93 may be thinner than the heat-sealable resin layer 53. The thickness of the heat-sealable resin layer 93 may be, for example, 5 to 20 μm. When the barrier film 90 includes the heat-sealable resin layer 93, the barrier film 90 and the lid 60 can be suitably joined by heat fusion. The barrier layer 91 and the heat-sealable resin layer 93 may be joined by the adhesive layer 55.

When the barrier film 90 is joined to the lid 60, the material for forming the lid 60 does not include the material for forming the barrier film 90.

[Electrode Terminal]

Fig. 4 is a perspective view showing a configuration near the electrode terminal 30. The electrode terminal 30 is a conductive member electrically connected to the electrode assembly 20 (positive electrode or negative electrode), and is a terminal used for inputting and outputting electric power to and from the electrode assembly 20. The electrode terminal 30 according to the present embodiment is formed in, for example, a plate shape having a thickness. Hereinafter, the thickness of the electrode terminal 30 is designated as T (mm). The thickness T is an average value of thickness values measured at three points arbitrarily extracted from a portion of the electrode terminal 30 fixed to the lid 60. In the present embodiment, the thickness direction of the electrode terminal 30 coincides with the thickness direction (UD direction) of the electrical storage device 10.

The electrode terminal 30 has the one end part 300 and the other end part 301 disposed along the first direction. In the present embodiment, the first direction coincides with the depth direction (FB direction) of the electrical storage device 10. The one end part 300 of the electrode terminal 30 is connected to the electrode assembly 20. The other end part 301 of the electrode terminal 30 protrudes to the outside of the outer packaging 40.

The electrode terminal 30 is composed of the first material. Here, the phrase "composed of the first material" means that the content ratio of the first material is 50 mass% or more, preferably 80 mass% or more, more preferably 90 mass% or more, still more preferably 95 mass% or more when the total of materials for forming the electrode terminal 30 is 100 mass%. For example, when the electrode terminal 30 is composed of metal containing an alloy, the metal is the first material. For example, when the electrode terminal 30 includes a main body composed of metal containing an alloy and a plating layer composed of metal containing an alloy and laminated on the outer surface of the main body, the metal for forming the main body is the first material.

The first material according to the present embodiment is metal. The metal is, for example, aluminum, nickel, copper, or an alloy thereof. For example, when the electrode assembly 20 is a lithium ion battery, the first material of the electrode terminal 30 connected to the positive electrode is usually aluminum or an aluminum alloy. On the other hand, the first material of the electrode terminal 30 connected to the negative electrode is usually copper, nickel, or a copper alloy. In this case, for example, the electrode terminal 30 can be obtained by plating the main body composed of copper as the first material with nickel.

From the viewpoint of enhancing electrolytic solution resistance, it is preferable that the surface of the electrode terminal 30 is subjected to chemical conversion treatment. For example, when the electrode terminal 30 is formed of aluminum, specific examples of the chemical conversion treatment include a known method in which a corrosion-resistant film of a phosphate, a chromate, a fluoride, a triazinethiol compound or the like is formed. Among the methods for forming a corrosion-resistant film, phosphoric acid chromate treatment using a material including three components: a phenol resin, a chromium (III) fluoride compound and phosphoric acid is preferred.

The adhesive film 31 is joined to the outer peripheral surface of the electrode terminal 30 according to the present embodiment. The adhesive film 31 can be arbitrarily selected as long as it is a film capable of bonding the electrode terminal 30 composed of metal as the first material and the lid 60 composed of resin as the second material. For the adhesive film 31, for example, a polyolefin-based resin such as a polyethylene-based resin or a polypropylene-based resin, a cyclic polyolefin-based resin, or an acid-modified polyolefin-based resin obtained by graft-modifying the polyolefin-based resin with an acid such as maleic anhydride can be used. The adhesive film 31 can be a film having a single layer or two or more layers of any of the above-mentioned resins. In the present embodiment, the adhesive film 31 is joined to the entire portion of the outer peripheral surface of the electrode terminal 30 facing at least the inner wall surface of the through-hole 60X.

Here, a direction in which the lid 60 intersects the electrode terminal 30 as viewed from the thickness direction of the electrical storage device 10 is referred to as a second direction. The second direction intersects the first direction in the same plane as the first direction, and is orthogonal to the thickness direction of the electrode terminal 30. The electrode terminal 30 is fixed to the lid 60 along the second direction by the adhesive film 31 described above. In the present embodiment, the second direction is orthogonal to the first direction and coincides with the width direction of the electrode terminal 30 and the width direction (LR direction) of the electrical storage device 10. The length of the electrode terminal 30 fixed to the lid 60 (more precisely, the inner wall surface of the through-hole 60X) along the second direction is designated as L0 (mm). In the present embodiment, since the front surface and the back surface of the electrode terminal 30 are fixed to the inner wall surface of the through-hole 60X, the length L0 is equal to (L1 × 2) when the length of the electrode terminal 30 along the second direction is designated as L1. The length L1 is an average of values obtained by measuring lengths along the second direction at three points arbitrarily extracted from a portion of the electrode terminal 30 fixed to the lid 60.

[Deformation Bearing Force]

The thermal shock test is a test for evaluating deformation resistance of the electrical storage device 10 to a temperature change. The thermal shock test can be performed by, for example, a test apparatus in which a sample basket accommodating the electrical storage device 10 is repeatedly moved alternately between a low-temperature chamber and a high-temperature chamber to cause a rapid temperature change in the electrical storage device 10. The temperature of the low-temperature chamber is maintained at, for example, -40°C, -30°C, or -20°C, and the temperature of the high-temperature chamber is maintained at, for example, 60°C, 70°C, or 80°C. The number of cycles of movement of the sample basket accommodating the electrical storage device 10 is, for example, 100 to 1500 times.

As a result of intensive studies, the present inventors have found that the Vickers hardness h (HV) of the first material, the thickness T (mm) and the length L0 (mm) of the electrode terminal 30, the linear expansion coefficient $\alpha 1$ ($10^{-6}$/°C) of the first material, and the linear expansion coefficient $\alpha 2$ ($10^{-6}$/°C) of the second material contribute to the degree of deformation of the electrode terminal 30 in the thermal shock test. More specifically, the "deformation bearing force P (mm×HV$^2$)" which is an index indicating the deformation resistance of the electrode terminal 30 in the thermal shock test, is defined as the following formula (1).

$$P = (h \times T)^2 \times (\alpha 1 / \alpha 2) \div L0 \qquad (1)$$

It is considered that the structure and properties of the electrode terminal 30 itself, such as the thickness T of the electrode terminal 30 and the Vickers hardness h of the first material, contribute to the ease of deformation of the electrode terminal 30, and the deformation is suppressed as the thickness T is larger or as the Vickers hardness h of the first material is larger. In addition to this, it is considered that a fixing mechanism between the electrode terminal 30 and the lid 60 and a difference in relative physical properties therebetween also contribute to the ease of deformation of the electrode terminal 30. Specifically, it is considered that as the length of the electrode terminal 30 fixed to the inner wall surface of the through-hole 60X along the second direction is shorter, the electrode terminal 30 is less likely to be affected by a size change due to a temperature change of the lid 60, and deformation is suppressed. It is considered that as the difference in the size change ratio due to the temperature change between the electrode terminal 30 and the lid 60 is smaller, the electrode terminal 30 is less likely to be affected by a size change due to a temperature change of the lid 60, and deformation is suppressed. The difference in the size change ratio due to a temperature change between the electrode terminal 30 and the lid 60 can be expressed by the ratio ($\alpha 1 / \alpha 2$) of the linear expansion coefficient $\alpha 1$ of the first material to the linear expansion coefficient $\alpha 2$ of the second material.

The present inventors have experimentally confirmed that when the deformation bearing force P calculated according to the above formula is less than 0.222, the electrode terminal 30 is deformed to a visible extent when 100 cycles of temperature change of -40 to 70°C are executed. The deformation of the electrode terminal 30 was particularly remarkable in a portion from a peripheral edge portion of the through-hole 60X, which is a fixing portion between the electrode terminal 30 and the lid 60, to the other end part 301. On the other hand, the present inventors have confirmed that when the deformation bearing force P is 0.222 or more, visible deformation does not occur in the electrode terminal 30 even when a similar cycle is executed.

The Vickers hardness h is a hardness evaluated by pressing a regular quadrangular pyramidal diamond indenter under a predetermined test force F (N) into a test surface of one sample of the first material at a test temperature of 23°C, releasing a test load, and then calculating an average d (mm) of lengths a pair of diagonal lines of the indentation remaining on the sample surface. The test surface of the sample coincides with a surface of the electrode terminal 30 facing the UD direction. The test force F at the time of measuring the Vickers hardness h is 1.961 N, the indentation speed of the diamond indenter is 0.1 mm/s, the time until the test force F is reached is 4 seconds, and the holding time of the test force is 12 seconds. Other measurement conditions are conditions described in JIS Z2244-1:2020. For an existing electrical storage device, a sample of the first material can be obtained by removing plating from the electrode terminal.

The linear expansion coefficient of metal is a value measured in accordance with a method prescribed in JIS Z 2285:2003 by subjecting one sample of the metal to a total expansion type thermomechanical analyzer prescribed in JIS Z 2285:2003 and performing an indentation test. The sample of the metal has a cube shape of 1 mm in length × 1 mm in width × 1 mm in thickness, the length direction coincides with the FB direction of the electrode terminal 30, the width direction coincides with the LR direction of the electrode terminal 30, and the thickness direction coincides with the UD direction of the electrode terminal 30. Both ends of the sample of the metal in the length direction have a parallelism tolerance of 25 μm prescribed in JIS B 0621. The load of indentation by the total expansion type thermomechanical analyzer is set to 10 g, the measurement temperature range is set to 20°C to 300°C, and the temperature increase rate is set to 5°C/min. As the standard substance, quartz glass having the same shape and the same size as the sample and having recommended values of thermal expansion and linear expansion coefficient is used. The linear expansion coefficient of resin is a value measured in accordance with a method prescribed in JIS K 7197:2012 by subjecting one test piece of the resin to a thermomechanical analysis (TMA) apparatus prescribed in JIS K 7197:2012 and performing an indentation test. The test piece of the resin has a cube shape of 1 mm in length × 1 mm in width × 1 mm in thickness, the length direction coincides with the FB direction of the lid 60, the width direction coincides with the LR direction of the lid 60, and the thickness direction coincides with the UD direction of the lid 60. The parallelism of both ends in the length direction of the test piece of the resin is set to ±25 μm. The load of indentation by the thermomechanical analyzer is set to 10 g, the measurement temperature range is set to 20°C to 120°C, and the temperature increase rate is set to 5°C/min.

When it is not possible to obtain a sample of metal having a thickness of 1 mm along the UD direction from the electrode terminal of the existing electrical storage device, the method of measuring the linear expansion coefficient of the first material may be changed. Specifically, the sample of the metal obtained from the electrode terminal can have a size of a length of 15 mm (FB direction in the electrode terminal) × a width of 3 mm (LR direction in the electrode terminal) × collectable thickness (UD direction in the electrode terminal). In this case, the linear expansion coefficient of the first material is a ratio of the amount of change in the length of the sample to the temperature, which is measured by pulling the sample of the metal in the length direction by the thermomechanical analyzer. The measurement temperature range in this measurement is set to 20°C to 300°C, and the temperature increase rate is set to 5°C/min. The tensile load in the tensile test by the thermomechanical analyzer is set to 4 g. When the linear expansion coefficient of the first material is measured by this method or when it is not possible to obtain a test piece of resin from the lid of the existing electrical storage device, the method of measuring the linear expansion coefficient of the second material may be changed. Specifically, the test piece of the resin obtained from the lid can have a size of a length of 15 mm (FB direction in the lid) × a width of 3 mm (LR direction in the lid) × collectable thickness (UD direction in the lid). In this case, the linear expansion coefficient of the second material is a ratio of the amount of change in the length of the test piece to the temperature, which is measured by pulling the test piece of the resin in the length direction by the thermomechanical analyzer. The measurement temperature range in this measurement is set to 20°C to 120°C, and the temperature increase rate is set to 5°C/min. The tensile load in the tensile test by the thermomechanical analyzer is set to 4 g.

<2. Modifications>

While some embodiments of the present invention have been described above, the present invention is not limited to the above embodiments, and various modifications can be made without departing from the gist of the present invention. For example, the following modifications are possible. The gist of the following modifications can be appropriately combined.

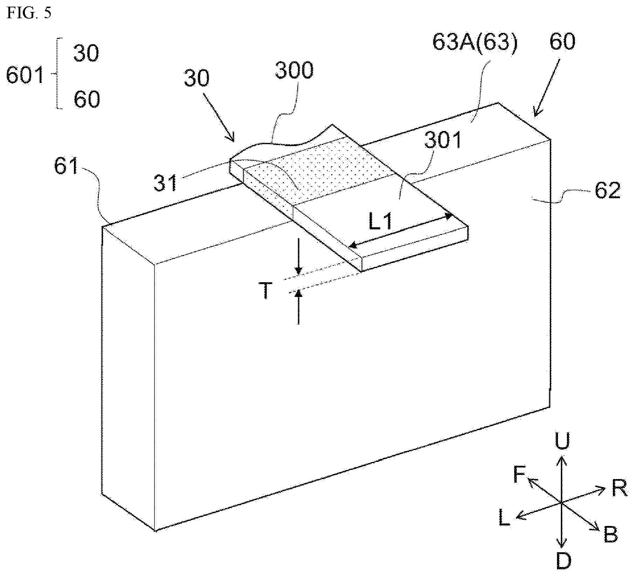

(1) In the above embodiment, the electrode terminal 30 is fixed to the lid 60 so as to pass through the through-hole 60X of the lid 60. However, as shown in Fig. 5, it is also possible to fix the electrode terminal 30 between the first seal surface 63A or the fourth seal surface 63D and the heat-sealable resin layer 53 of the exterior film 50 without forming the through-hole 60X in the lid 60. Also in this case, the deformation bearing force P can be calculated by applying the above formula (1). In this case, the length L0 (mm) of the electrode terminal 30 fixed to the lid 60 along the second direction is equal to the length L1 (mm) of the electrode terminal 30 along the second direction. Hereinafter, as shown in Fig. 5, one in which the electrode terminal 30 is fixed to the lid 60 may be referred to as an electrode terminal unit 601.

(2) In the above embodiment, the outer packaging 40 had the exterior film 50 and the pair of lids 60. However, the configuration of the outer packaging 40 is not limited to that of the above embodiment. For example, the exterior film 50 may not be wound so as to be in contact with the outer surface of the electrode assembly 20. The place where the bulging portion 50X is formed is not limited to that of the above embodiment, and the bulging portion 50X itself may be omitted. Instead of the exterior film 50, a plurality of plate-shaped members made of the same material as the material for forming the lid 60 may be used to seal the electrode assembly.

(3) The second material is not limited to the resin exemplified in the above embodiment. The second material may be, for example, a metal oxide, a carbon fiber-reinforced plastic, or a rubber material, and may be a combination of two or more of these materials, or a combination of at least one of these materials and resin.

(4) The electrode assembly 20 may be fixed to the lid 60 without using the adhesive film 31. The electrode assembly 20 and the lid 60 may be fixed by, for example, a heat-sealable resin that fills a gap therebetween or an adhesive.

(5) The exterior film 50 of the electrical storage device 10 may protrude outward from the lid 60 in the depth direction (FB direction). A portion of the exterior film 50 protruding from the lid 60 may be folded like a Goebel-top type pouch or a brick type pouch.

(6) The lid 60 is not limited to a substantially rectangular shape. For example, the shape may be a substantially circular shape, a substantially elliptical shape, or a substantially polygonal shape.

<3. Supplemental items>

The present invention further includes the following embodiments.

(1) The present invention can be implemented not only as the electrical storage device 10 but also as the electrode terminal unit 600 or 601 for an electrical storage device, the electrode terminal unit at least partially constituting the outer packaging 40 sealing the electrode assembly 20 of the electrical storage device 10. The electrode terminal unit 600 or 601 includes the electrode terminal 30 and the fixing member (lid 60). The electrode terminal 30 has the one end part 300 and the other end part 301 disposed along the first direction, and the one end part 300 is configured to be connected to the electrode assembly 20 of the electrical storage device 10. The fixing member is fixed to the electrode terminal 30 along the second direction intersecting the first direction between the one end part 300 and the other end part 301 of the electrode terminal 30, and is composed of a second material different from the first material. When a Vickers hardness of the first material is designated as h (HV), a thickness of the electrode terminal along a direction orthogonal to the first direction and the second direction is designated as T (mm), a linear expansion coefficient of the first material is designated as $\alpha 1$, a linear expansion coefficient of the second material is designated as $\alpha 2$, and a length of the electrode terminal 30 fixed to the fixing member along the second direction is designated as L0 (mm), (h $\times$ T)$^2 \times$ ($\alpha 1/\alpha 2$) $\div$ L0 $\geq$ 0.222 is satisfied.

Each of the electrode terminal units 600 and 601 may have the adhesive film 31 and the barrier film 90.

(2) The present invention can be implemented as an outer packaging set for an electrical storage device for at least partially constituting the outer packaging 40 sealing the electrode assembly 20 of the electrical storage device 10. The outer packaging set includes the electrode terminal unit 600 or 601 for an electrical storage device described in (1), and the exterior film 50 joined to the electrode terminal unit 600 or 601. Examples

Hereinafter, Examples of the present invention will be described in detail. It is to be noted that the present invention is not limited to examples.

<Experiment>

A lid composed of resin and an electrode terminal composed of metal were prepared, and these were fixed to each other using an adhesive resin to obtain a sample of an outer packaging according to Examples 1 to 5 and Comparative Examples 1 and 2. The lid and the electrode terminal were formed so as to have a rectangular plate-shaped outer shape in any sample. The electrode terminal had one end part and the other end part along the first direction in any sample, and was fixed to the lid along the second direction orthogonal to the first direction between the one end part and the other end part. More specifically, the electrode terminal was fixed to the lid such that the first direction was parallel to the thickness direction of the lid and the second direction was parallel to the width direction of the lid. As a mode of fixing the lid and the electrode terminal, there were two modes of Mode 1 of fixing both surfaces of the electrode terminal such that the electrode terminal passes through the through-hole formed in the lid as shown in Fig. 4, and Mode 2 of fixing one surface of the electrode terminal to the seal surface of the lid as shown in Fig. 5. For fixing the lid and the electrode terminal, a common adhesive film was used for each sample. The first material for forming the electrode terminal according to each sample, the Vickers hardness h (HV) of the first material, the thickness T (mm) of the electrode terminal, the length L1 (mm) of the electrode terminal along the second direction, the length L0 (mm) of the electrode terminal fixed along the second direction, the mode of fixing the electrode terminal, the second material for forming the lid, linear expansion coefficient $\alpha 1$ ($10^{-6}$/°C) of the first material, the linear expansion coefficient $\alpha 2$ ($10^{-6}$/°C) of the second material, and the calculated deformation bearing force P (mm$\times$HV$^2$) were as shown in Table 1 below. The Vickers hardness h, the linear expansion coefficient $\alpha 1$, and the linear expansion coefficient $\alpha 2$ were each measured by the methods described above. For reference, Table 1 also shows alloy symbols and temper designations of metals used as materials for forming the electrode terminal.

[Table 1]

| | Comparative Example | | Example | | | | |
|---|---|---|---|---|---|---|---|
| | 1 | 2 | 1 | 2 | 3 | 4 | 5 |
| First material | Aluminum | Aluminum | Aluminum | Aluminum | Copper | Aluminum | Aluminum alloy |
| Alloy/quality | A1050-O | A1050-O | A1050-O | A1050-O | C1020-O | A1050-O | A5052-H34 |
| Hardness h | 19 | 19 | 19 | 19 | 51 | 19 | 68 |
| Thickness T | 0.3 | 0.3 | 0.3 | 0.3 | 0.3 | 0.8 | 0.3 |
| Length L1 | 45 | 45 | 22 | 15 | 45 | 50 | 45 |
| Length L0 | 90 | 45 | 44 | 30 | 90 | 50 | 90 |
| Fixing mode | 1 | 2 | 1 | 1 | 1 | 2 | 1 |
| Second material | Polypropylene | Polypropylene | Polypropylene | Polypropylene | Polypropylene | Polypropylene | Polypropylene |
| $\alpha 1$ | 23.8 | 23.8 | 23.8 | 23.8 | 17.7 | 23.8 | 23.8 |
| $\alpha 2$ | 79 | 79 | 79 | 79 | 79 | 79 | 79 |
| Deformation bearing force P | 0.109 | 0.218 | 0.222 | 0.326 | 0.583 | 1.392 | 1.393 |

EP 4 693 709 A1

<Experimental results>

For each of the samples according to Examples 1 to 5 and Comparative Examples 1 and 2, it was visually confirmed that no deformation occurred in the electrode terminal before the heat shock test. Next, each sample was set in a sample basket of a heat shock testing apparatus, and an operation of alternately moving a low-temperature chamber maintained at -40°C and a high-temperature chamber maintained at 70°C was repeated 100 cycles (one cycle of one reciprocation). Thereafter, each sample was taken out from the heat shock testing apparatus, and whether or not deformation occurred in the electrode terminal was visually confirmed. The results were as shown in Table 2 below. As the heat shock testing apparatus, a small thermal shock tester (TSE-12-A, manufactured by ESPEC CORPORATION) was used, but the apparatus used in the heat shock test is not limited thereto.

[Table 2]

|  | Comparative Example | | Example | | | | |
|---|---|---|---|---|---|---|---|
|  | 1 | 2 | 1 | 2 | 3 | 4 | 5 |
| Deformation | Present | Present | Absent | Absent | Absent | Absent | Absent |

From the above results, it was confirmed that when the electrical storage device satisfies the deformation bearing force P ≥ 0.222, the deformation of the electrode terminal due to the temperature change can be suppressed.

Reference Signs List

10 Electrical storage device
20 Electrode assembly
30 Electrode terminal
31 Adhesive film
40 Outer packaging
50 Exterior film
60 Lid (fixing member)
300 One end part
301 Other end part
h Vickers hardness
T Thickness
L0 Fixed length between lid and electrode terminal
$\alpha1$, $\alpha2$ Linear expansion coefficient

**Claims**

1. An electrical storage device comprising:

an electrode assembly;
an outer packaging sealing the electrode assembly; and
an electrode terminal having one end part and other end part disposed along a first direction, the one end part being connected to the electrode assembly, the other end part protruding to an outside of the outer packaging, and the electrode terminal being composed of a first material, wherein
the outer packaging has a fixing member fixed to the electrode terminal along a second direction intersecting the first direction between the one end part and the other end part of the electrode terminal and composed of a second material different from the first material, and
when a Vickers hardness of the first material is designated as h (HV), a thickness of the electrode terminal along a direction orthogonal to the first direction and the second direction is designated as T (mm), a linear expansion coefficient of the first material is designated as $\alpha1$, a linear expansion coefficient of the second material is designated as $\alpha2$, and a length of the electrode terminal fixed to the fixing member along the second direction is designated as L0 (mm),

$$(h \times T)^2 \times (\alpha 1/\alpha 2) \div L0 \geq 0.222$$

is satisfied.

2. The electrical storage device according to claim 1, wherein the first material is metal, and the second material is resin.

3. An electrode terminal unit for an electrical storage device, comprising:

an electrode terminal having one end part and other end part disposed along a first direction, the one end part being configured to be connected to an electrode assembly of an electrical storage device, and the electrode terminal being composed of a first material; and

a fixing member fixed to the electrode terminal along a second direction intersecting the first direction between the one end part and the other end part of the electrode terminal and composed of a second material different from the first material, wherein

when a Vickers hardness of the first material is designated as h (HV), a thickness of the electrode terminal along a direction orthogonal to the first direction and the second direction is designated as T (mm), a linear expansion coefficient of the first material is designated as $\alpha 1$, a linear expansion coefficient of the second material is designated as $\alpha 2$, and a length of the electrode terminal fixed to the fixing member along the second direction is designated as L0 (mm),

$$(h \times T)^2 \times (\alpha 1/\alpha 2) \div L0 \geq 0.222$$

is satisfied.

4. An outer packaging set for an electrical storage device, comprising:

the electrode terminal unit for an electrical storage device according to claim 3; and
an exterior film joined to the electrode terminal unit.

FIG. 1

FIG. 2

FIG. 3

FIG. 4

FIG. 5

FIG. 6

FIG. 7

FIG. 8

90

92

54

91

FIG. 9

90

92

54

91

55

93

## INTERNATIONAL SEARCH REPORT

| International application No. |
|---|
| **PCT/JP2024/013389** |

| A. | CLASSIFICATION OF SUBJECT MATTER |
|---|---|

*H01M 50/553*(2021.01)i; *H01G 11/78*(2013.01)i; *H01M 50/105*(2021.01)i; *H01M 50/131*(2021.01)i; *H01M 50/15*(2021.01)i; *H01M 50/16*(2021.01)i; *H01M 50/176*(2021.01)i; *H01M 50/178*(2021.01)i; *H01M 50/534*(2021.01)i; *H01M 50/562*(2021.01)i

FI:  H01M50/553; H01M50/534; H01M50/105; H01M50/178; H01M50/131; H01M50/15; H01M50/16; H01M50/176; H01M50/562; H01G11/78

According to International Patent Classification (IPC) or to both national classification and IPC

| B. | FIELDS SEARCHED |
|---|---|

Minimum documentation searched (classification system followed by classification symbols)

H01M50/553; H01G11/78; H01M50/105; H01M50/131; H01M50/15; H01M50/16; H01M50/176; H01M50/178; H01M50/534; H01M50/562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2005/091398 A1 (NEC CORPORATION) 29 September 2005 (2005-09-29) paragraphs [0011], [0014], [0021], [0054]-[0056] | 1-4 |
| A | JP 2009-123646 A (SONY CORPORATION) 04 June 2009 (2009-06-04) paragraphs [0054], [0057], [0066], [0069], [0070], [0086]-[0097], fig. 6, 7 | 1-4 |
| A | US 2014/0356701 A1 (SHENZHEN BYD AUTO R&D COMPANY LIMITED) 04 December 2014 (2014-12-04) | 1-4 |
| A | JP 2014-522553 A (SCHOTT AG) 04 September 2014 (2014-09-04) | 1-4 |

☐ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 June 2024** | **25 June 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/013389**

| Patent document<br>cited in search report | | | Publication date<br>(day/month/year) | Patent family member(s) | | | Publication date<br>(day/month/year) |
|---|---|---|---|---|---|---|---|
| WO | 2005/091398 | A1 | 29 September 2005 | US | 2006/0210872 | A1 | |
| | | | | paragraphs [0011], [0014],<br>[0031], [0064]-[0066] | | | |
| | | | | EP | 1739766 | A1 | |
| | | | | KR | 10-2006-0016755 | A | |
| | | | | CN | 1771615 | A | |
| JP | 2009-123646 | A | 04 June 2009 | (Family: none) | | | |
| US | 2014/0356701 | A1 | 04 December 2014 | WO | 2013/097727 | A1 | |
| | | | | EP | 2798687 | A1 | |
| | | | | CN | 103187543 | A | |
| JP | 2014-522553 | A | 04 September 2014 | US | 2014/0099533 | A1 | |
| | | | | WO | 2012/167921 | A1 | |
| | | | | EP | 3782966 | A1 | |
| | | | | DE | 102011103976 | A | |
| | | | | CN | 103384649 | A | |
| | | | | KR | 10-2014-0006905 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022040929 A